# EUROPÄISCHE PATENTANMELDUNG

(11) **EP 2 075 781 A1**
(43) Veröffentlichungstag der Anmeldung: **01.07.2009**
(21) Anmeldenummer: 08018957.4
(22) Anmeldetag: 30.10.2008
(51) Int. Cl.: G09B 29/00

(54) **Verfahren zur Erzeugung einer digitalen Landkarte**

(30) Priorität: 18.12.2007 DE 102007061657
(71) Anmelder: Navigon AG, 20251 Hamburg (DE)
(72) Erfinder: Tudose, Radu, 97072 Würzburg (DE)
(74) Vertreter: von den Steinen, Axel

(57) **Zusammenfassung**

Die Erfindung betrifft ein Verfahren zur Erzeugung einer auf einem elektronischen Speichermedium speicherbaren, digitalen Landkarte, in der ein geographisches Gebiet durch eine Vielzahl von Datensätzen beschrieben ist, mit folgenden Verfahrensschritten:
a) Laden einer Datenbank, in der das geographisches Gebiet durch eine Vielzahl von Datensätzen beschrieben ist, in eine elektronische Analyseeinrichtung, wobei in den Datensätzen mehrere Textdatensätze enthalten sind, die Textmitteilungen (03), insbesondere Straßennamen, zur Darstellung in der Landkarte beschreiben,
b) Vorgabe einer Auflösung für die graphische Darstellung zumindest eines Ausschnitts der digitalen Landkarte mit zugeordneten Textmitteilungen (03) zur Anzeige an einer Anzeigeeinrichtung,
c) Berechnung von graphischen Überschneidungen (07) von Textmitteilungen (03) bei Anzeige des Ausschnitts der digitalen Landkarte an der Anzeigeeinrichtung in Abhängigkeit der vorgegebenen Auflösung,
d) Identifizierung aller Textmitteilungen (03), die graphische Überschneidungen (07) verursachen,
e) Speicherung von Textdarstellungsattributen, die den Textdatensätzen zugeordnet sind, wobei die Textdarstellungsattribute die Information enthalten, welche Textmitteilungen (03) bei einer vorgegebenen Auflösung in der graphischen Darstellung der digitalen Landkarte zur Vermeidung von Überschneidungen (07) nicht angezeigt werden.

## Beschreibung

Die Erfindung betrifft ein Verfahren zur Erzeugung einer auf einem elektronischen Speichermedium speicherbaren, digitalen Landkarte, in der ein geographisches Gebiet durch eine Vielzahl von Datensätzen beschrieben ist.

Digitale Landkarten werden insbesondere, jedoch keineswegs ausschließlich, für den Betrieb von Navigationsgeräten verwendet. Bei digitalen Landkarten, die in Navigationsgeräten zum Einsatz kommen können, besteht die Möglichkeit, neben dem geographischen Gebiet auch Textmitteilungen, insbesondere Straßennamen, graphisch darzustellen. Um während der Bewegung des Navigationsgerätes die Positionsänderung in Echtzeit auf der Anzeigeeinrichtung des Navigationsgerätes darstellen zu können, ist es auf Grund der begrenzten Rechenleistung von Navigationsgeräten notwendig, die Daten der digitalen Landkarten derart vorzuverarbeiten, dass während des Betriebs möglichst wenig Rechenleistung benötigt wird.

In gattungsgemäßen Verfahren zur Erzeugung von digitalen Landkarten werden den Textmitteilungen in einem Vorverarbeitungsschritt feste Positionen zugewiesen, was dazu führt, dass die Textmitteilungen immer an der selben geographischen Position in der digitalen Landkarte dargestellt werden, wodurch während des Betriebs die Positionen für die Darstellung von Textmitteilungen nicht mehr berechnet werden müssen.

Nachteilig an diesem Stand der Technik ist, dass es bei den Textmitteilungen zu Überschneidungen kommen kann. Zur Behebung der Überschneidungen bzw. für die Entscheidung, welche Textmitteilungen angezeigt werden sollen, wird wiederum ein gewisses Maß an Rechenleistung benötigt. Die Berechnung der Überschneidungen während des Betriebs eines Navigationsgerätes kann einerseits dazu führen, dass ein und dieselbe Textmitteilung innerhalb kürzester Zeit immer wieder von der Anzeigeeinrichtung des Navigationsgerätes verschwindet und wieder auftaucht, und kann andererseits zu einer Überlastung der Recheneinheit des Navigationsgerätes führen und dadurch eine stockende Darstellung auf der Anzeigeeinrichtung verursachen.

Ausgehend von diesem Stand der Technik ist es die Aufgabe der vorliegenden Erfindung, ein verbessertes Verfahren zum Erzeugen von digitalen Landkarten vorzuschlagen, das die Zeit und die Rechenleistung für die graphische Darstellung von Textmitteilungen in digitalen Landkarten minimiert.

Vorteilhafte Ausführungsformen der Erfindung sind Gegenstand der Unteransprüche.

Das erfindungsgemäße Verfahren beruht auf dem Grundgedanken, dass den Textdatensätzen der digitalen Landkarte ein Textdarstellungsattribut zugewiesen wird, das Informationen enthält, welche Textmitteilung in der graphischen Darstellung der Karte angezeigt wird. Dazu werden in einem ersten Verfahrensschritt die Datensätze, die das geographische Gebiet der Landkarte beschreiben, in eine elektronische Analyseeinrichtung geladen, um eine Vorverarbeitung zu ermöglichen. Da die Überschneidungen der Textmitteilungen in der graphischen Darstellung der digitalen Landkarte von der Auflösung der Darstellung abhängig sind, wird in einem zweiten Verfahrensschritt die Auflösung für die graphische Darstellung festgelegt, die zur Darstellung von wenigstens einem Teil der digitalen Landkarte und den darin enthaltenen Textmitteilungen verwendet wird. Im anschließenden Verfahrensschritt werden die Überschneidungen der Textmitteilungen berechnet, die bei der Anzeige von wenigstens einem Teil der digitalen Landkarte auf einer Anzeigeeinrichtung bei der im vorherigen Verfahrensschritt gewählten Auflösung entstehen. Nach der Berechnung der Überschneidungen werden in einem weiteren Verfahrensschritt die Textmitteilungen identifiziert, die an wenigstens einer Überschneidung beteiligt sind, um schließlich in einem letzten Verfahrensschritt den Textdatensätzen Textdarstellungsattribute zuzuweisen und abzuspeichern, die die Information enthalten, welche Textmitteilungen bei einer vorgegebenen Auflösung in der graphischen Darstellung der digitalen Landkarte zur Vermeidung von Überschneidungen nicht angezeigt werden.

Um eine Darstellung der digitalen Landkarte auf einer Anzeigeeinrichtung mit mehreren verschiedenen Auflösungen zu ermöglichen, ist es besonders sinnvoll, den zweiten und dritten Verfahrensschritt für verschiedene Auflösungen mehrmals nacheinander durchzuführen und den Textdatensätzen einen Grenzauflösungswert als Textdarstellungsattribut zuzuweisen und zu speichern, der festlegt, bis zu welcher Auflösung der graphischen Darstellung eine Textmitteilung angezeigt wird. Dies ermöglicht eine sehr effektive Vorverarbeitung der Textdatensätze, da die Textdatensätze nach der Speicherung der Darstellungsgrenzwerte beispielsweise nach diesem Textdarstellungsattribut sortiert abgespeichert werden können, was für jede mögliche Auflösung der graphischen Darstellung das Auslesen der darzustellenden Textmitteilungen extrem vereinfacht.

Da bei einer höheren Auflösung grundsätzlich weniger Textmitteilungen dargestellt werden, ist es offensichtlich, dass eine graphische Darstellung mit einer hohen Auflösung zu weniger Überschneidungen von Textmitteilungen führt als eine graphische Darstellung mit einer geringeren Auflösung. Daher ist es eine vorteilhafte Ausführungsform des erfindungsgemäßen Verfahrens, dass der zweite und der dritte Verfahrensschritt nacheinander für mehrere Auflösungen der graphischen Darstellung durchgeführt werden, wobei mit der höchsten Auflösung begonnen wird und die Auflösung schrittweise verringert wird, um schließlich den Textdatensätzen einen Darstellungsgrenzwert als Textdarstellungsattribut zuzuweisen, der für jeden Textdatensatz die Darstellung für die verschiedenen Auflösungen regelt. Typischerweise wird dieses Verfahren bis zu einer vorgebbaren Grenzauflösung durchgeführt, ab der gar keine Straßennamen mehr dargestellt werden. Für Fernstraßennummerierungen (A3, B112 ...) kann das Verfahren separat durchgeführt werden.

Für eine möglichst vielfältige und vorteilhafte graphische Darstellung der digitalen Landkarte auf einer Anzeigeeinrichtung ist es besonders wünschenswert, zwischen mehreren Anzeigemodi wechseln zu können, und um die Vorteile des erfindungsgemäßen Verfahrens für jeden Anzeigemodus nutzen zu können, empfiehlt es sich, wenigstens zwei verschiedene Textdarstellungsattribute in den Textdatensätzen zu speichern, die jeweils einem Anzeigemodus zugeordnet sind. Dadurch lassen sich mit einem sehr geringen zusätzlichen Speicheraufwand die Vorteile des erfindungsgemäßen Verfahrens auf mehrere bzw. alle zur Darstellung der digitalen Landkarte vorgesehenen Anzeigemodi ausweiten.

Die Ausgestaltung der unterschiedlichen Anzeigemodi ist grundsätzlich beliebig. Es hat sich jedoch als besonders vorteilhaft erwiesen, wenn das erste Textdarstellungsattribut einem Anzeigemodus zur graphischen Darstellung einer digitalen Landkarte mit einer festen Winkelorientierung der darzustellenden Landkarte auf der Anzeigeeinrichtung und das zweite Textdarstellungsattribut einem Anzeigemodus zur graphischen Darstellung einer digitalen Landkarte mit veränderlichem Orientierungswinkel der darzustellenden Landkarte auf der Anzeigeeinrichtung zugewiesen ist.

Eine möglichst große Ähnlichkeit mit einer klassischen Landkarte und eine dadurch bedingte Erhöhung der Ablesbarkeit wird erreicht, indem der Anzeigemodus mit der festen Winkelorientierung der digitalen Landkarte auf der Anzeigeeinrichtung, dem das erste Textdarstellungsattribut zugewiesen ist, derart auf der Anzeigeeinrichtung dargestellt wird, dass die Nord Süd-Richtung vom oberen zum unteren Rand der Anzeigeeinrichtung verläuft.

Des Weiteren ist für die Darstellung der digitalen Landkarte auf der Anzeigeeinrichtung eines in Bewegung befindlichen Navigationsgerätes ein Anzeigemodus vorteilhaft, in dem die aktuelle Bewegungsrichtung, insbesondere die Fahrtrichtung, vom oberen zum unteren Rand der Anzeigeeinrichtung verläuft. Dadurch wird eine besonders intuitive Orientierung, insbesondere im Bezug auf Abbiegemanöver, ermöglicht.

Eine vorteilhafte Ausführungsform des erfindungsgemäßen Verfahrens besteht darin, dass jedem Textdatensatz ein Anzeigefeld zugeordnet ist, dessen Größe durch die Darstellbarkeit der Textmitteilung definiert ist.

Wenn die digitale Landkarte in dem zweiten oben beschriebenen Anzeigemodus graphisch dargestellt wird, ergibt sich das Problem, dass ab einer gewissen Winkelorientierung bestimmte Textmitteilungen unter einem Winkel gegen die normale Schriftorientierung dargestellt werden, unter dem ein problemloses Ablesen der Textmitteilung nicht mehr möglich ist. Aus diesem Grund ist es besonders sinnvoll, für die graphische Darstellung der digitalen Landkarte in einem Anzeigemodus mit einer nicht winkelfesten Orientierung auf einer Anzeigeeinrichtung jedem Textdatensatz zwei Anzeigefelder zuzuordnen, die so positioniert sind, dass abhängig vom aktuellen Orientierungswinkel der digitalen Landkarte die Textmitteilungen jeweils entweder im ersten oder im zweiten Anzeigefeld mit jeweils umgekehrter Anzeigeorientierung angezeigt werden. Somit erscheint jede Textmitteilung im zweiten Anzeigemodus maximal mit einer Verkippung von ±90° gegenüber der horizontalen Textorientierung, was ein permanentes Ablesen jeder angezeigten Textmitteilung ermöglicht.

Eine besonders einfache Handhabung der Anzeigefelder wird erreicht, wenn es sich bei den Anzeigefeldern um Rechtecke handelt, deren Höhe der Schriftgröße des darzustellenden Textes und deren Länge der Länge des darzustellenden Textes angepasst ist. Durch diese Eigenschaften können die Anzeigefelder einfach von elektronischen Analyseeinrichtungen verarbeitet werden.

Durch die Verwendung von Anzeigefeldern, die von der Analyseeinrichtung sehr einfach verarbeitet werden können, im Gegensatz zu den Umrissen der tatsächlichen Textmitteilungen, ist eine besonders einfache Berechnung und Identifizierung von Datensätzen mit Überschneidungen von Textmitteilungen gemäß dem dritten und vierten Verfahrensschritt durchführbar, da dazu lediglich die Überschneidungen der den einzelnen Textmitteilungen zugeordneten Anzeigefelder berechnet werden müssen.

Die Qualität der graphischen Darstellung der digitalen Landkarte hängt maßgeblich vom Informationsgehalt, der durch die Textmitteilungen erzeugt wird, ab. Zur Maximierung des Informationsgehalts ist es daher sinnvoll, die Identifikation von Textmitteilungen, die zur Vermeidung graphischer Überschneidungen ab einer gewissen Auflösung nicht mehr dargestellt werden, und die damit verbundene Zuweisung und Speicherung von Darstellungsgrenzwerten als Textdarstellungsattribute in Abhängigkeit von vorgegebenen Priorisierungsregeln durchzuführen. Durch die Priorisierungsregeln kann so im Vorfeld festgelegt werden, wie der Informationsgehalt der einzelnen Textmitteilung zu bewerten ist.

Die Ausgestaltung der oben genannten Priorisierungsregeln ist grundsätzlich beliebig. Jedoch ist es besonders sinnvoll, als eine erste Priorisierungsregel von Textmitteilungen die Funktionsklasse von Straßen, deren Straßenname oder Streckenbezeichnung als Textmitteilung angezeigt werden soll und die sich wenigstens mit einer weiteren Textmitteilung überschneiden, auszuwerten.

Es ist natürlich möglich, dass für zwei oder mehr Textmitteilungen keine Priorisierung auf Grund einer ersten Priorisierungsregel erhalten wird, und dass deshalb die Identifizierung von Textmitteilungen, die ab einer gewissen Auflösung nicht mehr dargestellt werden sollen, nicht auf Grund einer Priorisierungregel möglich ist. Für diesen Fall ist es vorteilhaft, weitere Priorisierungsregeln zu durchlaufen, bis eine Priorisierung einer Textmitteilung, die sich mit wenigstens einer weiteren Textmitteilung überschneidet, ermittelt werden kann. Für eine zweite Prioritätsregel ist es günstig, zur Klassifikation von Textmitteilungen die Straßenkategorie von Straßen innerhalb einer Funktionsklasse auszuwerten.

Falls eine weitere Priorisierungsregel zur Identifikation von Textmitteilungen, die ab einer gewissen Auflösung nicht mehr dargestellt werden sollen, nötig ist, hat sich die Auswertung der Textmitteilung bezüglich der Länge des Straßennamens als sehr sinnvoll erwiesen, da ein außergewöhnlich langer Straßenname beispielsweise eine sehr viel höhere Wahrscheinlichkeit aufweist, eine Vielzahl von Überschneidungen mit anderen Textmitteilungen zu verursachen. Wird eine besonders lange Textmitteilung nicht mehr angezeigt, können dadurch im besten Fall eine Vielzahl von anderen Textmitteilungen angezeigt und der Informationsgehalt der graphischen Darstellung der digitalen Landkarte kann gesteigert werden.

In einer weiteren vorteilhaften Ausführungsform erfolgt die Speicherung der mit dem erfindungsgemäßen Verfahren hergestellten Datenbank auf einem Arbeitsspeicher oder Massenspeicher. Dadurch sind ein schneller Zugriff und eine dauerhafte Speicherung der Datensätze gegeben.

Das erfindungsgemäße Verfahren eignet sich besonders gut für die Vorverarbeitung von Daten zur graphischen Darstellung eines geographischen Gebietes mit einem Navigationsgerät. Daher ist es vorteilhaft, wenn die elektrische Analyseeinrichtung zum Erzeugen der digitalen Landkarte im Navigationsgerät installiert ist, und wenn die Datensätze auf einem Arbeitsspeicher oder Massenspeicher gespeichert werden, der ebenfalls Bestandteil des Navigationsgerätes ist.

Um die Informationen der digitalen Landkarte zu aktualisieren, und/oder um mehrere verschiedene digitale Landkarten von verschiedenen geographischen Gebieten verwenden zu können, ist es günstig, wenn das Speichermedium wechselbar mit dem Navigationsgerät verbunden ist. Gemäß einer weiteren vorteilhaften Ausführungsform ist der Massenspeicher oder Arbeitsspeicher deshalb in der Art einer Festplatte, CD-Rom oder einer Speicherkarte ausgebildet.

Eine ständige und kurzfristige Aktualisierung der digitalen Landkarte wird ermöglicht, indem das Speichermedium, insbesondere der Massenspeicher oder der Arbeitsspeicher, und die Analyseeinrichtung auf einem Server außerhalb des Navigationsgerätes installiert sind und die Datenbank der digitalen Landkarte mittels Datenfernübertragung an das Navigationsgerät übertragen wird. Weitere Vorteile dieser Ausführungsform liegen darin, dass die Vorverarbeitung keinerlei Rechenleistung des Navigationsgerätes in Anspruch nimmt und dass eine Vielzahl von Navigationsgeräten auf die digitale Landkarte zugreifen kann.

In einer weiteren vorteilhaften Ausführungsform werden mehrere Textdatensätze der Datenbank der digitalen Landkarte von einem Bildgenerator zur Erzeugung einer graphischen Kartendarstellung auf einer Anzeigeeinrichtung eines Endgerätes, insbesondere eines Navigationsgerätes, ausgelesen und weiterverarbeitet. Dabei erfolgt das Auslesen und Weiterverarbeiten der Textdatensätze und der zugeordneten Textdarstellungsattribute nach der Vorverarbeitung durch das erfindungsgemäße Verfahren mit einem Minimum an Zeit- und Rechenaufwand.

Die Erfindung betrifft ferner ein Navigationsgerät mit einem Speicher, in dem eine digitale Landkarte zur Beschreibung eines geographischen Gebiets abgespeichert ist. Dabei ist auf dem Speicher eine Datenbank gespeichert, die durch das erfindungsgemäße Verfahren erzeugt wurde.

Verschiedene Aspekte des erfindungsgemäßen Verfahrens sind in den Zeichnungen schematisiert dargestellt und werden nachfolgend beispielhaft erläutert.

Es zeigen:
- Fig. 1: einen schematischen Ausschnitt einer Landkarte mit mehreren Textmitteilungen nach der Zuweisung von Textdarstellungsattributen für den ersten Anzeigemodus;
- Fig. 2: einen schematischen Ausschnitt einer Landkarte mit mehreren Textmitteilungen vor der Zuweisung von Textdarstellungsattributen für den zweiten Anzeigemodus;
- Fig. 3: einen schematischen Ausschnitt einer Landkarte mit mehreren Textmitteilungen nach der Zuweisung von Textdarstellungsattributen für den zweiten Anzeigemodus;
- Fig. 4: einen schematischen Ausschnitt einer Landkarte mit mehreren Textmitteilungen, der einer Darstellung des zweiten Anzeigemodus auf einer Anzeigeeinrichtung entspricht.

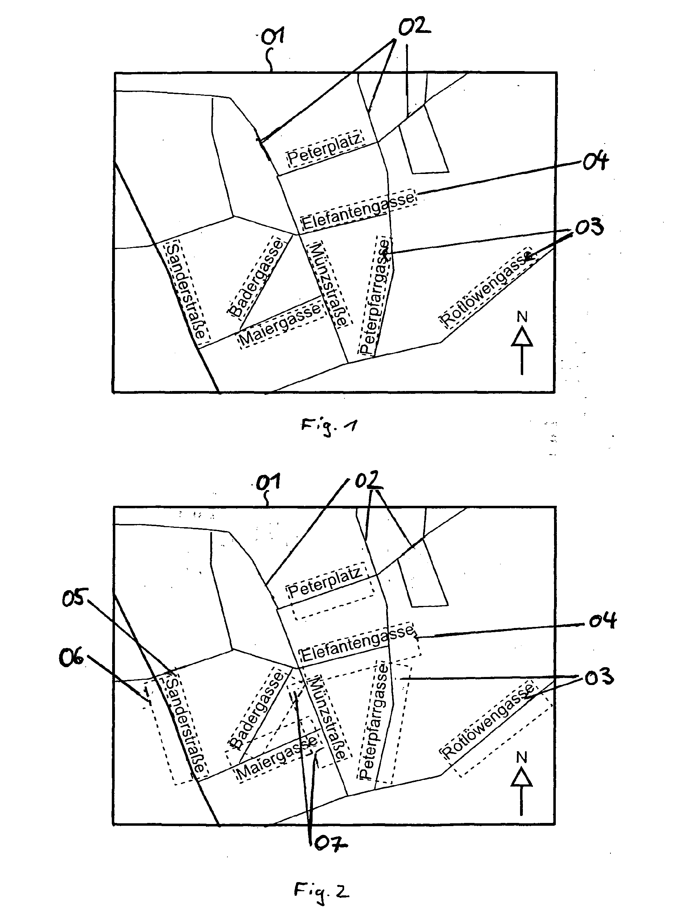

Fig. 1 zeigt beispielhaft einen Ausschnitt einer Landkarte 01 mit einer bestimmten Auflösung und einer sehr geringen Detailstufe. Es sind mehrere Straßen 02 zu erkennen, die teilweise mit einer Textmitteilung 03 versehen sind, die den Straßennamen enthält. Dabei ist jeder Straßenname in einem Anzeigefeld 04 eingefasst, dessen Ausmaße durch die gestrichelten Rechtecke dargestellt sind. Die Anzeigefelder 04 der dargestellten Textmitteilungen 03 weisen keine Überschneidungen auf. Daher muss für keine der dargestellten Textmitteilungen 03 der Grenzauflösungswert auf die dargestellte Auflösung gesetzt werden. Bei den Straßen, die nicht mit einer Textmitteilung 03 versehen sind, wurde durch das erfindungsgemäße Verfahren wenigstens eine Überschneidung mit anderen Textmitteilungen 03 festgestellt, und auf Grund der Priorisierungsregeln wurde die Anzeige der Textmitteilung für die gegebene Auflösung unterdrückt. Diesen Straßen wurde als Textdarstellungsattribut ein Grenzauflösungswert zugewiesen, der einer Auflösung entspricht, die wenigstens einen Schritt größer ist als die dargestellte Auflösung und bei der keine Überschneidungen mit anderen Textmitteilungen 03 auftreten. Die Fig. 1 zeigt somit das Ergebnis des erfindungsgemäßen Verfahrens für einen kleinen Teil einer digitalen Landkarte 01 bei einer gegebenen Auflösung.

Fig. 2 zeigt denselben Ausschnitt einer Landkarte 01 wie Fig. 1 mit derselben Auflösung. Die Abbildung veranschaulicht die Ausgangssituation vor der Durchführung des erfindungsgemäßen Verfahren für den zweiten Anzeigemodus, der eine Landkarte vorsieht, bei der die aktuelle Fahrtrichtung vom oberen zum unteren Rand der Karte auf der Anzeigeeinrichtung eines Navigationsgerätes verläuft. Dargestellt sind die Textmitteilungen 03, die gemäß dem erfindungsgemäßen Verfahren für den ersten Anzeigemodus bei der gegebenen Auflösung dargestellt werden. Bei den Anzeigefeldern 04 der Textmitteilungen 03 handelt es sich um die Kombination aus einem ersten Anzeigefeld 05 und einem zweiten Anzeigefeld 06. Es sind mehrere Überschneidungen 07 von Anzeigefeldern 04 erkennbar. So überschneidet sich beispielsweise das Anzeigefeld 04 der "Badergasse" mit dem Anzeigefeld 04 der "Münzstraße". Somit muss durch das erfindungsgemäße Verfahren festgestellt werden, welche der Textmitteilungen bei der gegebenen Auflösung im zweiten Anzeigemodus angezeigt werden. Dies geschieht auf Grund der Priorisierungsregeln, die die Textmitteilungen 03, deren Anzeigefelder 04 sich überschneiden, anhand von vorgegebenen Kriterien, wie beispielsweise Funktionsklasse der Straße, Straßenkategorie, die Länge des Straßennamens, Länge der Straße und/oder Anzahl der zu der Straße gehörigen Straßensegmente, analysieren. Schließlich wird ein Textdarstellungsattribut mit dem Textdatensatz gespeichert, das über die Darstellung der Textmitteilung bei einer gegebenen Auflösung entscheidet.

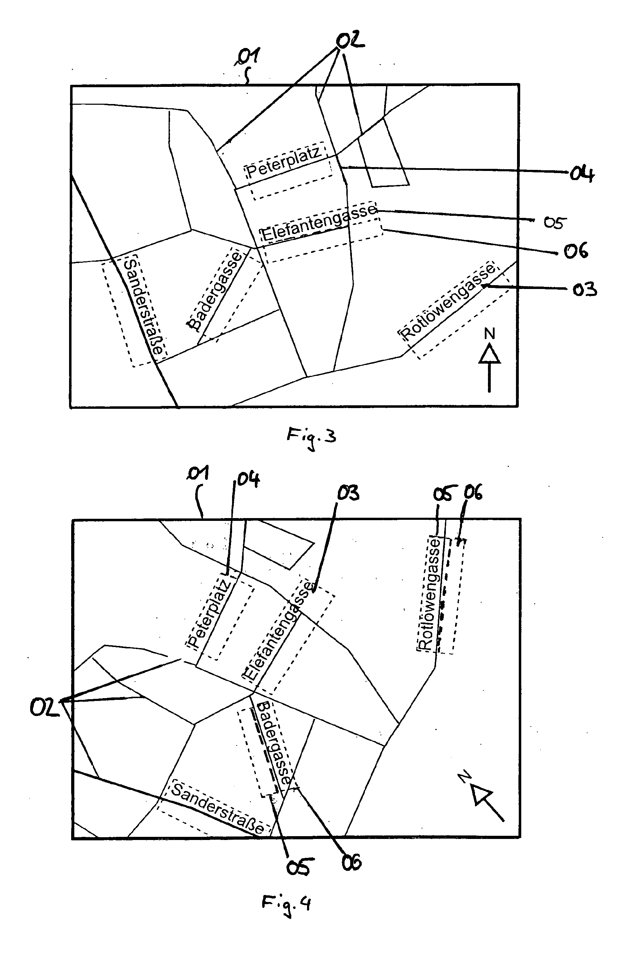

Fig. 3 zeigt das Ergebnis des erfindungsgemäßen Verfahrens für die in Fig. 2 dargestellte Ausgangssituation. Die Anzahl der Textmitteilungen 03 ist gegenüber Fig. 2 sichtlich reduziert, und es treten keine weiteren Überschneidungen auf. Den im Vergleich zu Fig. 2 nicht mehr dargestellten Textmitteilungen wurde als Textdarstellungsattribut ein Grenzdarstellungswert zugewiesen, der die Darstellung der Textmitteilung 03 für den zweiten Anzeigemodus bei der gegebenen Auflösung verhindert.

Fig. 4 zeigt den Ausschnitt einer Landkarte 01, der nach einer Drehung aus dem in Fig. 3 dargestellten Kartenausschnitt hervorgeht, und veranschaulicht die Bedeutung der Verwendung von jeweils zwei Anzeigefeldern 04 pro Textmitteilung 03 im zweiten Anzeigemodus. In Fig. 4 wird der Ausschnitt der Landkarte 01 als schemenhafte Darstellung einer digitalen Landkarte auf der Anzeigeeinrichtung eines Navigationsgerätes betrachtet, für das der zweite, oben beschriebene Anzeigemodus aktiviert ist. Die Textmitteilung "Badergasse" wäre bei der Verwendung von nur einem Anzeigefeld 04 pro Textmitteilung 03, wie beispielsweise in Fig. 1 nach der Rotation des Kartenausschnitts in die Position der Fig. 4, derart verkippt dargestellt worden, dass nur ein erschwertes Ablesen der Textmitteilung 03 möglich gewesen wäre. Durch die Verwendung des zweiten Anzeigefeldes 06 wird jedoch ab einer Verkippung von mehr als ±90° die Textmitteilung 03 gespiegelt im zweiten Anzeigefeld 06 dargestellt, und eine gute Ablesbarkeit der Textmitteilung bleibt erhalten. Dadurch, dass beide Anzeigefelder 05 und 06 einer Textmitteilung 03 zur Ermittlung von Überschneidungen herangezogen werden, entsteht auch nach der Spiegelung und Anzeige der Textmitteilung 03 im zweiten Anzeigefeld 06 keine Überschneidung mit einer anderen Textmitteilung 03.

## Patentansprüche

1. Verfahren zur Erzeugung einer auf einem elektronischen Speichermedium speicherbaren, digitalen Landkarte, in der ein geographisches Gebiet durch eine Vielzahl von Datensätzen beschrieben ist, mit folgenden Verfahrensschritten:
a) Laden einer Datenbank, in der das geographisches Gebiet durch eine Vielzahl von Datensätzen beschrieben ist, in eine elektronische Analyseeinrichtung, wobei in den Datensätzen mehrere Textdatensätze enthalten sind, die Textmitteilungen (03), insbesondere Straßennamen, zur Darstellung in der Landkarte beschreiben,
b) Vorgabe einer Auflösung für die graphische Darstellung zumindest eines Ausschnitts der digitalen Landkarte mit zugeordneten Textmitteilungen (03) zur Anzeige an einer Anzeigeeinrichtung,
c) Berechnung von graphischen Überschneidungen (07) von Textmitteilungen (03) bei Anzeige des Ausschnitts der digitalen Landkarte an der Anzeigeeinrichtung in Abhängigkeit der vorgegebenen Auflösung,
d) Identifizierung aller Textmitteilungen (03), die graphische Überschneidungen (07) verursachen,
e) Speicherung von Textdarstellungsattributen, die den Textdatensätzen zugeordnet sind, wobei die Textdarstellungsattribute die Information enthalten, welche Textmitteilungen (03) bei einer vorgegebenen Auflösung in der graphischen Darstellung der digitalen Landkarte zur Vermeidung von Überschneidungen (07) nicht angezeigt werden.

2. Verfahren nach Anspruch 1,
**dadurch gekennzeichnet,**
**dass** die Verfahrensschritte b) und c) nacheinander für mehrere Auflösungen für die graphische Darstellung der digitalen Landkarte durchgeführt werden, wobei als Textdarstellungsattribute Grenzauflösungswerte gespeichert werden, und wobei eine Textmitteilung (03) eines Textdatensatzes bei graphischer Darstellung der digitalen Landkarte nicht angezeigt wird, wenn die aktuelle Auflösung der graphischen Darstellung kleiner oder kleiner-gleich als der im Textdatensatz gespeicherte Grenzauflösungswert ist.

3. Verfahren nach Anspruch 2,
**dadurch gekennzeichnet,**
**dass** die Verfahrensschritte b) und c) nacheinander für mehrere Auflösungen für die graphische Darstellung der digitalen Landkarte durchgeführt werden, wobei mit der höchsten Auflösung begonnen wird und die Auflösung schrittweise verringert wird.

4. Verfahren nach einem der Ansprüche 1 bis 3,
**dadurch gekennzeichnet,**
**dass** zu den Textdatensätzen zumindest zwei verschiedene Textdarstellungsattribute berechnet und gespeichert werden, wobei die verschiedenen Textdarstellungsattribute jeweils einem Anzeigemodus zugeordnet sind.

5. Verfahren nach Anspruch 4,
**dadurch gekennzeichnet,**
**dass** ein erstes Textdarstellungsattribut einem ersten Anzeigemodus zur graphischen Darstellung der digitalen Landkarte zugeordnet ist, in dem die Landkarte mit fest vorgegebener Winkelorientierung an der Anzeigeeinrichtung dargestellt wird, wobei ein zweites Textdarstellungsattribut einem zweiten Anzeigemodus zur graphischen Darstellung der digitalen Landkarte zugeordnet ist, in dem die Landkarte mit veränderlichem Orientierungswinkel an der Anzeigeeinrichtung dargestellt wird.

6. Verfahren nach Anspruch 5,
**dadurch gekennzeichnet,**
**dass** im ersten Anzeigemodus die digitale Landkarte derart graphisch dargestellt wird, dass die Nord-Süd-Richtung vom oberen zum unteren Rand der Anzeigeeinrichtung verläuft und die West-Ost-Richtung vom linken zum rechten Rand der Anzeigeeinrichtung verläuft.

7. Verfahren nach Anspruch 5,
**dadurch gekennzeichnet,**
**dass** im zweiten Anzeigemodus die digitale Landkarte derart graphisch dargestellt wird, dass die aktuelle Fahrtrichtung vom oberen zum unteren Rand der Anzeigeeinrichtung verläuft.

8. Verfahren nach einem der Ansprüche 1 bis 7,
**dadurch gekennzeichnet,**
**dass** jedem Textdatensatz zumindest ein Anzeigefeld (04) zugeordnet ist, dessen Größe durch die Darstellbarkeit der Textmitteilung definiert ist.

9. Verfahren nach einem der Ansprüche 1 bis 8,
**dadurch gekennzeichnet,**
**dass** jedem Textdatensatz zwei Anzeigefelder (05,06) zugeordnet sind, wobei im zweiten Anzeigemodus die Textmitteilungen in der graphischen Darstellung der digitalen Landkarte abhängig vom aktuellen Orientierungswinkel entweder im ersten Anzeigefeld (05) oder im zweiten Anzeigefeld (06) mit jeweils umgekehrter Anzeigeorientierung angezeigt werden.

10. Verfahren nach dem Anspruch 8 oder 9,
**dadurch gekennzeichnet,**
**dass** die Anzeigefelder (04) eine rechteckige Form aufweisen, wobei die Länge der Anzeigefelder (04) jeweils der Länge der anzuzeigenden Textmitteilung (03) angepasst ist, und wobei die Höhe der Anzeigefelder (04) jeweils der Schriftgröße der anzuzeigenden Textmitteilung (03) angepasst ist.

11. Verfahren nach einem der Ansprüche 8 bis 10,
**dadurch gekennzeichnet,**
**dass** in den Verfahrensschritten b) und c) die Berechnung und Identifikation von graphischen Überschneidungen (07) zwischen zwei Textmitteilungen (03) **dadurch** erfolgt, dass die Überschneidungen (07) zwischen den Anzeigefeldern (04), die den beiden Textmitteilungen (03) zugeordnet sind, berechnet und identifiziert werden.

12. Verfahren nach einem der Ansprüche 1 bis 11,
**dadurch gekennzeichnet,**
**dass** im Verfahrensschritt c) die Identifikation von Textmitteilungen (03), die zur Vermeidung von graphischen Überschneidungen (07) bei einer bestimmten Auflösung nicht angezeigt werden, in Abhängigkeit vorgegebener Priorisierungsregeln erfolgt.

13. Verfahren nach Anspruch 12,
**dadurch gekennzeichnet,**
**dass** eine erste Priorisierungsregel zur Identifikation von Textmitteilungen (03) vorgesehen ist, in der die Funktionsklasse von Straßen, deren Straßenname oder Streckenbezeichnung als Textmitteilung (03) angezeigt werden soll, ausgewertet wird.

14. Verfahren nach Anspruch 12 oder 13,
**dadurch gekennzeichnet,**
**dass** eine zweite Priorisierungsregel zur Identifikation von Textmitteilungen (03) vorgesehen ist, in der die Straßenkategorie von Straßen innerhalb einer Funktionsklasse ausgewertet wird.

15. Verfahren nach einem der Ansprüche 12 bis 14,
**dadurch gekennzeichnet,**
**dass** eine dritte Priorisierungsregel zur Identifikation von Textmitteilungen (03) vorgesehen ist, in der die Länge der Textmitteilungen (03), insbesondere die Länge von Straßennamen, ausgewertet wird.

16. Verfahren nach einem der Ansprüche 1 bis 15,
**dadurch gekennzeichnet,**
**dass** die Datenbank in einem Massenspeicher oder Arbeitsspeicher gespeichert ist.

17. Verfahren nach Anspruch 16,
**dadurch gekennzeichnet,**
**dass** der Massenspeicher oder Arbeitsspeicher Bestandteil des Navigationsgeräts ist, wobei die Datensätze mit einer im Navigationsgerät installierten Analyseeinrichtung analysiert werden.

18. Verfahren nach Anspruch 16 oder 17,
**dadurch gekennzeichnet,**
**dass** der Massenspeicher oder Arbeitsspeicher in der Art einer Festplatte, einer CD-Rom oder einer Speicherkarte ausgebildet ist.

19. Verfahren nach Anspruch 16,
**dadurch gekennzeichnet,**
**dass** der Massenspeicher auf einem Server außerhalb des Navigationsgeräts installiert ist, wobei die Datensätze mit einer auf dem Server installierten Analyseeinrichtung analysiert werden, und wobei die Datenbank der digitalen Landkarte per Datenfernübertragung an das Navigationsgerät übertragen wird.

20. Verfahren nach einem der Ansprüche 1 bis 19,
**dadurch gekennzeichnet,**
**dass** mehrere Textdatensätze der Datenbank der digitalen Landkarte von einem Bildgenerator zur Erzeugung einer graphischen Kartendarstellung auf einer Anzeigeeinrichtung eines Endgerätes, insbesondere eines Navigationsgeräts, ausgelesen und weiterverarbeitet werden.

21. Navigationsgerät mit einem Speicher, in dem eine digitale Landkarte zur Beschreibung eines geographischen Gebiets abgespeichert ist,
**dadurch gekennzeichnet,**
**dass** in dem Speicher eine Datenbank gespeichert ist, die mit einem Verfahren nach einem der Ansprüche 1 bis 20 erzeugt wurde.
